# EUROPÄISCHE PATENTSCHRIFT

(11) **EP 1 597 804 B1**
(45) Veröffentlichungstag und Bekanntmachung des Hinweises auf die Patenterteilung: **17.01.2007**
(21) Anmeldenummer: 04713893.8
(22) Anmeldetag: 24.02.2004
(51) Int. Cl.: H02B 1/50

(54) **ÜBERSTÜLPBARER VERTEILERSCHRANK**
SLIPOVER DISTRIBUTION CABINET
ARMOIRE DE DISTRIBUTION POUVANT ETRE ENFONCEE PAR LE HAUT

(30) Priorität: 25.02.2003 DE 10307944
(43) Veröffentlichungstag der Anmeldung: 23.11.2005
(73) Patentinhaber: ADC GMBH, 14167 Berlin (DE); Berthold Sichert GmbH, 12277 Berlin (DE)
(72) Erfinder: IRMER, Günter, 13055 Berlin (DE); PERSCHON, Helmut, 12277 Berlin (DE)
(86) Internationale Anmeldenummer: PCT/EP2004/001837
(87) Internationale Veröffentlichungsnummer: WO 2004/076278

(56) Entgegenhaltungen:
- EP-A- 0 849 850
- EP-A- 1 047 167
- DE-A- 10 105 993
- DE-A- 19 940 166
- DE-A- 19 941 413
- FR-A- 2 752 103
- FR-A- 2 766 850
- US-A1- 2002 140 325

## Beschreibung

### I. Anwendungsgebiet

Die Erfindung betrifft einen Verteilerschrank, der in der Regel im Freien aufgestellt ist und die technischen, z. B. elektrischen oder optischen Verteilanlagen für z. B. Schwachstromsysteme, beispielsweise Telefonanlagen, mit zugehörigen Stromversorgungseinrichtungen und Kabelab-/-anschlusseinrichtungen für ein bestimmtes räumliches Gebiet aufnimmt.

### II. Technischer Hintergrund

Derartige Verteilerschränke müssen - neben einer ausreichenden baulichen Stabilität sowie einer Widerstandsfähigkeit gegen Vandalismus etc. - heute weitere Forderungen erfüllen, beispielsweise dürfen keine zu starken elektromagnetischen Strahlungen an die Umgebung abgegeben werden, und für den Einsatz vor allem in wärmeren Ländern dürfen die Temperaturen im Inneren des Verteilerschrankes nicht zu hoch ansteigen trotz der dort untergebrachten, wärmeabgebenden elektrischen Baugruppen, aber auch nicht zu tief absinken.

Derartige Verteilerschränke werden grundsätzlich entweder aus Metall oder aus Kunststoff hergestellt, wobei Kunststoff den Vorteil einer billigeren Herstellbarkeit mit dem Vorteil eines elektrisch nicht leitenden Materials verbindet, so daß selbst bei außerplanmäßigen Kontaktierungen des Gehäuses des Verteilerschrankes durch ein elektrisches Bauelement nie die Gefahr besteht, daß bei Berühren des Gehäuses von außen die betreffende Person einen Stromschlag erhält.

Was die ausreichende Kühlmöglichkeit derartiger Verteilerschränke angeht, ist es bereits bekannt, eine Kühlung durch Luftzirkulation zu bewirken. Zu diesem Zweck sind die Wände des Korpus doppelwandig ausgeführt, wobei im Zwischenraum zwischen den Wänden die Umgebungsluft zirkulieren, also unten eintreten und oben austreten, kann, wodurch einerseits ein Aufheizen des Inneren durch das Sonnenlicht und andererseits eine Wärmeabfuhr an der inneren Wand, die durch die elektrischen Baugruppen im Hauptraum aufgeheizt werden, bewirkt wird.

Darüber hinaus sind moderne Verteilerschränke EMV-dicht ausgebildet, so dass also eine elektromagnetische Abstrahlung nur innerhalb der vorgegebenen Grenzwerte nach außen stattfinden kann.

Derartige Verteilerschränke stehen zum Teil auf Privatgrund, häufig jedoch auch auf öffentlichem Grund, so dass die jeweilige Kommune eine Genehmigung zum Aufstellen eines solchen Verteilerschrankes erteilen muss. Solange auch die Telekommunikationsunternehmen in staatlicher Hand waren, bereitete dies kaum Probleme, mit zunehmender Privatisierung lehnt die öffentliche Hand die Aufstellung ab oder fordert eine Gebühr für die Aufstellung, ganz abgesehen davon, dass ein Genehmigungsverfahren durchlaufen werden muss und viel Zeit kostet.

Dieses Problem stellt sich bei allen neu aufzustellenden Verteilerschränken, also insbesondere in Neubaugebieten, oder wenn in einem bestehenden Verteilerschrank der Raum für technische, insbesondere elektrische Einbauten erschöpft ist, und zur Erweiterung ein weiterer Verteilerschrank daneben gesetzt werden müsste.

Ein weiteres, technisches, Problem besteht bei Ersatz eines bestehenden Verteilerschrankes aus technischen Gründen, wenn also z. B. wegen der Verbesserung der EMV-Dichtigkeit oder der Kühlungsmöglichkeit der Korpus eines bereits bestehenden Verteilerschrankes ausgetauscht werden muss.

Dabei ist zu beachten, dass ein Verteilerschrank in der Regel auf einem tief im Boden eingegrabenen Sockel, meist aus Beton, in neuerer Zeit auch aus Kunststoff, aufsitzt, in welchen die zum Verteilerschrank hinführenden und von diesem wieder wegführenden Erdkabel von unten eingeführt sind, und auf welchem sowohl der üblicherweise vorhandene Montagerahmen, an welchem die technischen, insbesondere elektrischen Einbauten befestigt sind, ebenso aufgeschraubt ist wie der umgebende Korpus. Der Korpus ist - insbesondere bei der erwähnten zweischaligen Bauweise hinsichtlich des Innenkorpus - entweder aus fest miteinander verbundenen Platten erstellt, oder aus einem Korpusrahmen, der mittels Beplankung verschlossen wird. Auf einem solchen Innenkorpus wird mittels Beplankung im Abstand außen der Außenkorpus aufgesetzt.

Aus der DE 101 05 993 A1 ist ein Bausatz zum Erstellen eines Elektroschrankes bekannt, der einen äußeren Korpus, einen inneren Montagerahmen, eine Beplankung für den inneren Montagerahmen, mehrere unterschiedlich dimensionierte Sockelkästen, Auflageplatten zum Verbinden des Montagerahmens mit einem Sockelkasten und mehrere Befestigungspositionen für die Auflageplatten am Montagerahmen umfasst, mittels dessen ein Elektroschrank über einen alten Sockel eines alten Elektroschrank aufgebaut werden kann. Um den Elektroschrank auf unterschiedlich hoch über die Erdoberfläche aufragenden Sockelkästen befestigen zu können, insbesondere auf ebenerdig mit der Erdoberfläche abschließenden Sockelkästen, können die Auflageplatten, die die Verbindung zwischen Montagerahmen und Sockelkasten herstellen, an unterschiedlichen Befestigungspositionen des Montagerahmens angeordnet werden.

Aus der DE 199 41 413 A1 ist eine mobile Verteileranlage zur Versorgung von Ständen bekannt, umfassend ein Gehäuse sowie darin in mehreren Versorgungsmodulen angeordnete Zuleitungs- und Ausgangsanschlüsse, wobei das Gehäuse mit Trägerstreben gebildet ist, zwischen welchen die Versorgungsmodule von unterschiedlichen Seiten her lösbar angeordnet sind, wobei die Versorgungsmodule in Wannen derart gekapselt sind, dass die zwischen Zuleitungs- und Ausgangsanschlüsse vorgesehenen Verteilungsleitungen von der Wanne umschlossen sind und zwischen den Trägerstreben lediglich Wannenflächen aufeinander zuweisen, während offene Wannenseiten lediglich zur Außenseite des Gehäuses weisen, um dort die Ausgangsanschlüsse zugänglich zu machen. Des Weiteren weist das Gehäuse Türen auf, die die offenen Wannenseiten nach vorne verdecken sowie ein die Trägerstreben überkragender Deckel, an dem Kranösen vorgesehen sind.

Aus der FR 2 752 103 A1 ist eine Vorrichtung zum Messen und Verteilen von elektrischer Energie, insbesondere auf Baustellen, mit einem Versorgungsteil und einem Verteilerteil bekannt, wobei das Versorgungsteil ein Aufnahmeelement zur Aufnahme einer Messeinrichtung aufweist und wobei das Verteilerteil eine Energieverteilungs- und Sicherungseinrichtung umfasst, wobei das Aufnahmeelement zur Aufnahme eines separaten, eine Messeinrichtung umfassenden Anschlusskastens ausgestaltet ist und dass das Versorgungsteil über ein Verbindungselement mit dem Verteilerteil elektrisch verbunden ist, wobei das Verbindungselement eine Klemmvorrichtung aufweist, an die der Anschlusskasten anschließbar ist.

### III. Darstellung der Erfindung

### a) Technische Aufgabe

Es ist daher die Aufgabe der vorliegenden Erfindung, ein Verfahren zur Erweiterung des Montageraums eines Verteilerschrankes sowie einen Bausatz hierfür zur Verfügung zu stellen, dessen Austausch unproblematisch ist und bei dem der Verteilerschrank an der ursprünglichen Stelle verbleibt und damit keine neue Aufstellgenehmigung bzw. Baugenehmigung notwendig ist und ein unterbrechungsfreier Betrieb möglich ist.

### b) Lösung der Aufgabe

Diese Aufgabe wird durch die Merkmale der Ansprüche 1 und 17 gelöst. Vorteilhafte Ausführungsformen ergeben sich aus den Unteransprüchen.

Durch das Überstülpen eines neuen Sockels und auch eines neuen Korpus nach Entfernen des alten Korpus - über das alte Innenleben des Schaltschrankes, also bei Belassen des alten Sockels in seiner Position und der darauf aufgebauten Übertragungstechnik, also der technischen, insbesondere elektrischen Funktionsteile, ist keine Netzunterbrechung, also Abschaltung der technischen, insbesondere elektrischen Funktionselemente, im Inneren des Schaltschrankes notwendig.

Da der Schaltschrank in seiner bisherigen Position verbleibt und sich nur die Außenabmessungen des neuen Korpus mehr oder weniger stark vergrößern, ist in der Regel auch keine neue Aufstellgenehmigung behördlicherseits notwendig.

Durch das Entfernen des Erdreiches um den Sockel herum, vorzugsweise jedoch nicht ganz bis hinab zur Unterkante des alten Sockels, bleibt nicht nur der alte Sockel in seiner Position, sondern wird meist auch nicht vollständig während der Umbauarbeiten seiner Stabilität beraubt, so dass ein Umkippen des entkleideten alten Schaltschrankes während der Arbeit nicht zu befürchten ist.

Jedoch kann bei Bedarf jederzeit absichtlich - durch Entfernen des Erdreiches bis zur Unterkante des alten Sockels - der entkleidete alte Schaltschrank destabilisiert werden um ihn - zum Beispiel bei Schiefstellung - wieder gerade zu stellen oder auch um ihn von seinem Standort her geringfügig zu versetzen. Letzteres ist beispielsweise häufig dann notwendig, wenn der alte Schaltschrank mit seiner Rückseite zu nahe an einem bestehenden Gebäude, Gartenmauer oder ähnlichem positioniert war, und einige Zentimeter von dort abgerutscht werden muss, um den neuen Schaltschrank darüber zu stülpen.

Durch das Überstülpen des neuen, in der Aufsicht hohlen, Sockelkastens vorzugsweise in Form eines geschlossenen Kastenprofiles und insbesondere die von dem Sockelkasten nach vorzugsweise seitlich außen vorstehenden Sockelfüße wird dessen Aufstandsfläche so vergrößert, dass - trotz der geringeren Einbautiefe - eine sichere Abstützung im Erdreich gewährleistet ist.

Der Sockel wird dabei vorzugsweise vor dem Überstülpen aus dem meist einstückigen, möglicherweise aber auch mehrteiligen Sockelkasten und den Sockelfüßen zusammengebaut, wobei die Sockelfüße vorzugsweise wiederum aus Sockelfuß-Seitenteilen und einer pro Seite und damit für zwei Seitenteile durchgehenden Sockelfuß-Platte besteht.

Für den Transport sind die Sockelfüße häufig bereits am Sockelkasten befestigt, jedoch um 180° bezüglich einer vertikalen Achse verdreht, so dass die Sockelfuß-Platte nicht nach außen über den Sockelkasten vorsteht. In dieser Transportposition kann der Sockel auch im Falle eines Neuaufbaus eines Verteilerschrankes benutzt werden.

Dies reduziert zum einen das Transportvolumen des Sockels und zum anderen können die Teile aus dem jeweils günstigsten Werkstoff hergestellt werden, beispielsweise die Sockelfuß-Platten aus verzinkten Stahlblech-Gittern oder Kunststoffgittern, während die Sockelfuß-Seitenteile Stahlblech-Biegeteile sein können. Der Sockelkasten selbst besteht aus z. B. Beton, Kunststoff, Metall oder einem Gemisch aus diesen Materialien.

Die Herstellung der Sockelfuß-Platten als Gitterteile und insbesondere aus Kunststoff hat sich aus mehreren Gründen als vorteilhaft erwiesen: zum einen ist durch die Gitterform ein Einrütteln und damit Nivellieren des Sockels exakt in der Horizontalen auf einfache Art und Weise möglich. Besteht diese Sockelfuß-Platte aus Kunststoff, können auf einfache Art und Weise vor Ort Durchbrüche und Ausschnitte in der Platte hergestellt werden, beispielsweise um darin vom Verteiler wegführende Kabel unterzubringen.

Nach dem Ausrichten des Sockels, vor allem in die Horizontale, aber auch grob in dem seitlichen Abstand zum alten Sockel, erfolgt das Aufsetzen des neuen Korpus auf den neuen Sockel, indem der neue Korpus mittels in den Korpus eingeschraubten Hebeösen von einem Kran, insbesondere dem Ladekran des anliefernden LKW, angehoben und über die - von seinem alten Gehäuse befreiten - elektrischen Einbauten des alten Schaltschrankes und auch über dessen Sockel von oben her gestülpt wird, da der neue Sockel in der Regel weniger weit nach oben ragt als der alte "Sockel, so dass der neue Korpus in der Höhenlage auch-einen Teil des alten Sockels übergreift. In der Regel wird für die weiteren Arbeiten das Entfernen der äußeren Verkleidung des neuen Korpus, also der äußeren Seitenwände, Rückwand und Türen notwendig sein, was je nach Größe und Gewicht des neuen Korpus vor oder nach dem Überstülpen erfolgen kann.

Dagegen ist das Abnehmen des Dachmoduls, meist bestehend aus einem oberen Deckel und einem darunter befindlichen oberen Zwischenteil, die auf dem eigenstabilen Hauptteil des neuen Korpus aufsitzen, in der Regel zwingend erforderlich, da in diesen Hauptteil des neuen Korpus von oben her für das Überstülpen die Hebeösen zum Ansetzen des Kranes eingeschraubt oder anderweitig befestigt werden.

Zu diesem Zweck ist das Dachmodul bei der Anlieferung des neuen Korpus nur lose aufgelegt und nicht mit dem Rest des Korpus bereits fest verbunden.

Nach Verbinden, insbesondere Verschrauben, des neuen Korpus mit dem neuen Sockel, insbesondere der Unterkante des neuen Korpus mit der Oberkante des neuen Sockels, wird vorzugsweise mittels horizontal liegender Justier-Schrauben im neuen Korpus der neue Korpus - und damit auch der mit ihm bereits verbundene neue Sockel - in horizontaler Richtung auf den gewünschten Abstand zum alten Sockel gebracht.

Zu diesem Zweck weist der Korpus und insbesondere der Korpusrahmen des neuen Korpus horizontal verlaufende Querstreben knapp unter der Höhe der Oberkante des Korpus auf, an denen oder durch welche hindurch mittels horizontaler Gewindebohrungen die Justier-Schrauben von außen einschraubbar sind und sich an der Außenfläche des alten Sockels abstützen.

Vorzugsweise wird auch der alte Montagerahmen, an dem die Übertragungstechnik angebaut ist, vom alten Sockel gelöst, insbesondere durch Abdrehen oder Abreißen der verbindenden Schrauben, und statt dessen gegenüber dem neuen Korpus fixiert, insbesondere verschraubt.

Dies geschieht beispielsweise durch die bekannten Lochbänder aus Metall oder Kunststoff, die einerseits an dem alten Montagerahmen verschraubt werden, und andererseits am neuen Korpus auf der Innenseite, insbesondere an dessen Korpusrahmen. Zu diesem Zweck sind vor allem an einem solchen Korpusrahmen Nutensteine in hinterschnittenen Nuten, die entlang der Kantenprofile des Korpusrahmens verlaufen, verschraubbar.

Eine solche Fixierung erfolgt vorzugsweise im oberen Bereich des alten Montagerahmens als auch ggf. in dessen unteren Bereich. Durch die Verwendung der Lochbänder sind unterschiedliche Formen und Positionen der alten Montagerahmen am neuen Korpus befestigbar.

Zusätzlich wird die EMV-Dichtigkeit erreicht, in dem der in der Aufsicht betrachtete, umlaufende, Spalt zwischen dem alten Sockel und dem neuen Korpus durch eine - auf der Oberseite des alten Sockels angreifende - EMV-Abdichtung verschlossen wird.

Sofern der neue Korpus den alten Sockel mit nur geringem Abstand umgibt, erfolgt dies durch Aufkleben eines Streifens aus Metallfolie, beispielsweise einen mit Alufolie beschichteten Bitumenstreifen, der mit seinem einen Rand auf der Oberseite des alten Sockels und mit dem anderen Rand auf den auf dieser Höhe verlaufenden Querstreben des Korpusrahmens des neuen Rahmens aufliegt.

Sofern der neue Korpus zur Vergrößerung des Innenraumes für neue technische bzw. elektrische Einbauten dient, wird die dann größere offene Fläche neben dem alten Sockel mittels einer entsprechenden, aus Metall bestehenden oder mit Metall beschichteten, Platte verschlossen.

In dem zusätzlichen Innenraum ist - vorzugsweise bereits verbunden mit dem neuen Korpus und insbesondere dessen Korpusrahmen - bereits ein neuer Montagerahmen zur Aufnahme der neuen elektrischen Einbauten vorhanden.

Zuletzt wird der zuvor für die bessere Zugänglichkeit entmantelte neue Korpus wieder beplankt, also die Seitenwände von oben außen angehängt, und ebenso die Rückwand, und die Flügeltüren eingehängt durch Einschieben der über die gesamte Höhe der Tür durchgehende Scharnierstange von oben, die sowohl durch Scharnierösen des Seitenteiles als auch durch Scharnierösen der Tür hindurchgeführt wird.

Dabei ist vor allem darauf zu achten, dass die in den Türen und/oder in dem Gehäuserahmen angeordnete, umlaufende kombinierte Spritzwasser- und EMV-Dichtung nicht beschädigt wird, die vorzugsweise aus einem üblichen Weichkunststoff- oder Gummimaterial, vorzugsweise mit hohlem Querschnitt, als Spritzwasser-Abdichtung besteht, und auf deren Außenfläche eine metallisierte oder ein Metallgewebe enthaltende, vorzugsweise selbstklebende, Folie als EMV-Dichtung aufgebracht ist.

Zuletzt wird das Dachmodul aufgesetzt, welches mit seinem unteren Rand den oberen Rand der Seitenwände und Rückwand formschlüssig übergreift. Das Dachmodul ragt dabei mit Sicherungsfortsätzen, die eine Querbohrung aufweisen, zwischen dem Gehäuserahmen und der äußeren Seitenwand nach unten. Das Dachmodul wird bei vollständig geöffneten Türen gegen Abheben gesichert, indem jeweils ein Sicherungsstab von vorne im Zwischenraum zwischen Gehäuserahmen und Seitenwand des Gehäuses horizontal so eingeschoben wird, dass er sowohl die Bohrungen der Sicherungsfortsätze des Dachmoduls als auch vom Gehäuserahmen nach außen vorstehende analoge Sicherungsfortsätze durch entsprechende Bohrungen hindurch formschlüssig durchdringt. Nach Schließen und Versperren der Türen ist dieser Sicherungsstab von außen nicht mehr zugänglich, kann somit nicht entfernt werden, damit das Dachmodul nicht abgenommen werden und in der Folge auch die Seitenwände und die Rückwand nicht nach oben ausgehängt werden, und - sofern das Schloss nicht zerstört wird - auch die Fronttüren nicht geöffnet werden.

### c) Ausführungsbeispiele

Eine Ausführungsform gemäß der Erfindung ist im folgenden beispielhaft näher beschrieben. Es zeigen:
- Fig. 1:: das Überstülpen des neuen Sockels,
- Fig. 2:: den übergestülpten, abgesetzten neuen Sockel,
- Fig. 3:: das Überstülpen des Innenkorpus,
- Fig. 4:: den übergestülpten, abgesetzten und befestigten Innenkorpus,
- Fig. 5:: den am Umfang verkleideten Innenkorpus,
- Fig. 6:: mit zusätzlich aufgesetztem Dachmodul;
- Fig. 7:: den Innenkorpus allein,
- Fig. 8:: beplankt mit Seitenteilen,
- Fig. 9:: mit zusätzlichen Verkleidungen vorne und hinten im unteren Bereich,
- Fig. 10:: mit zusätzlicher angebrachter Rückwand und vorderen Türen,
- Fig. 11:: mit zusätzlich aufzusetzendem Dachmodul,
- Fig. 12:: im fertig zusammengebauten Zustand des Korpus und
- Fig. 13:: den Sockel alleine.

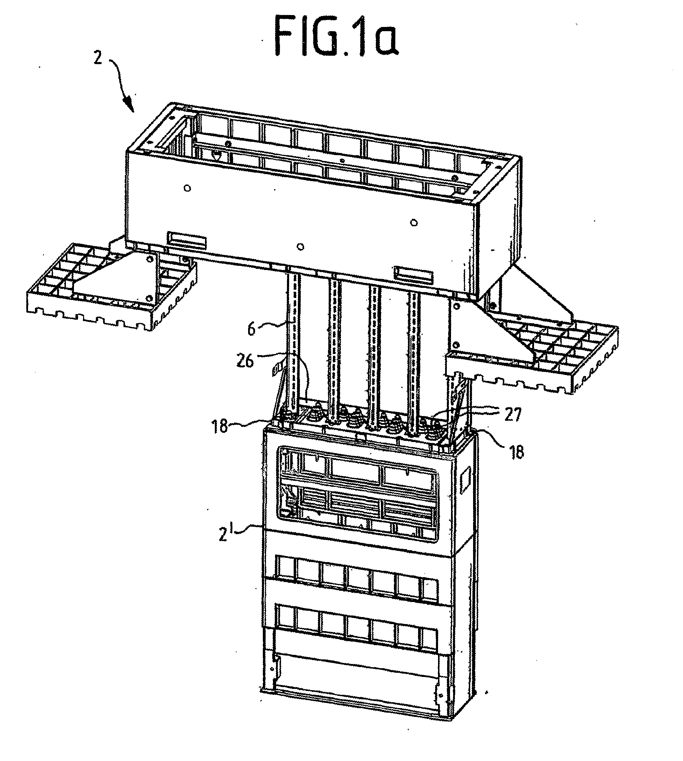

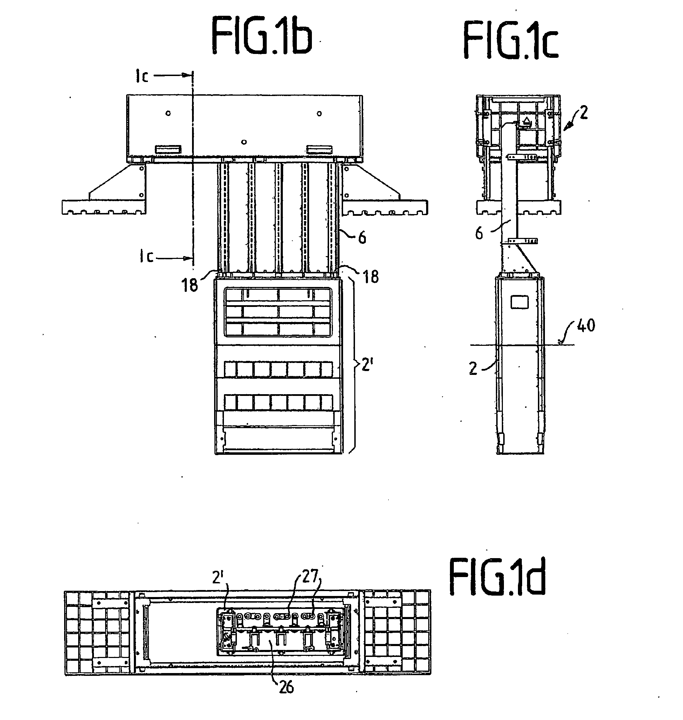

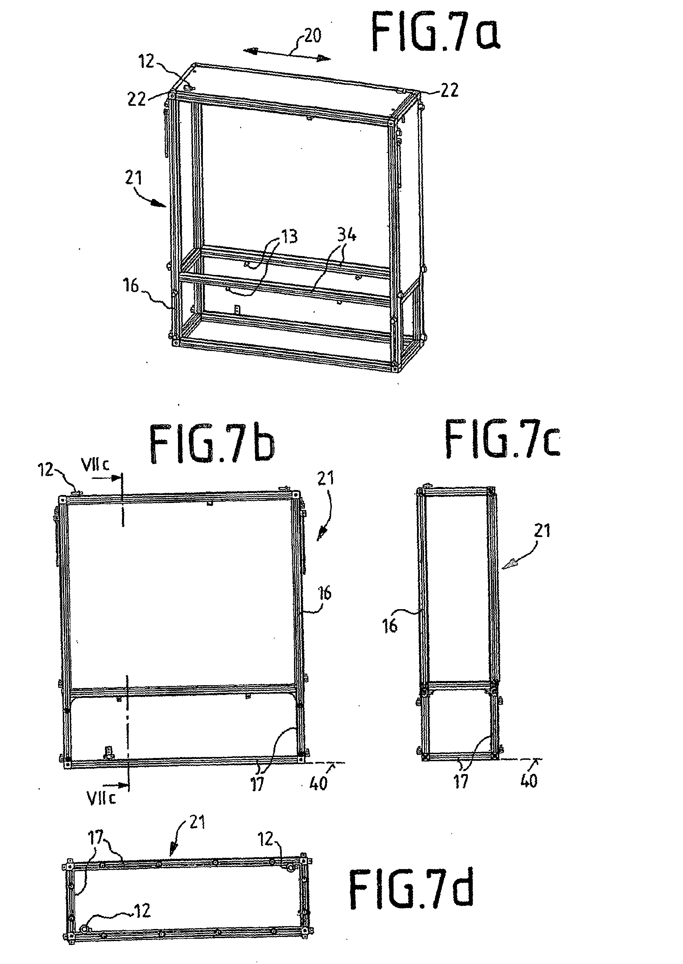

Bevor anhand der Fig. 1 bis 6 die Vorgehensweise beim Überstülpen des neuen Verteilerschrankes erläutert wird, werden dessen Einzelteile, nämlich der neue Sockel 2 und der neue Korpus 3, einzeln anhand der Fig. 7 bis 13 beschrieben, und dabei die unterschiedlichen Aufbauzustände des neuen Korpus 3 anhand der Fig. 7 bis 12.

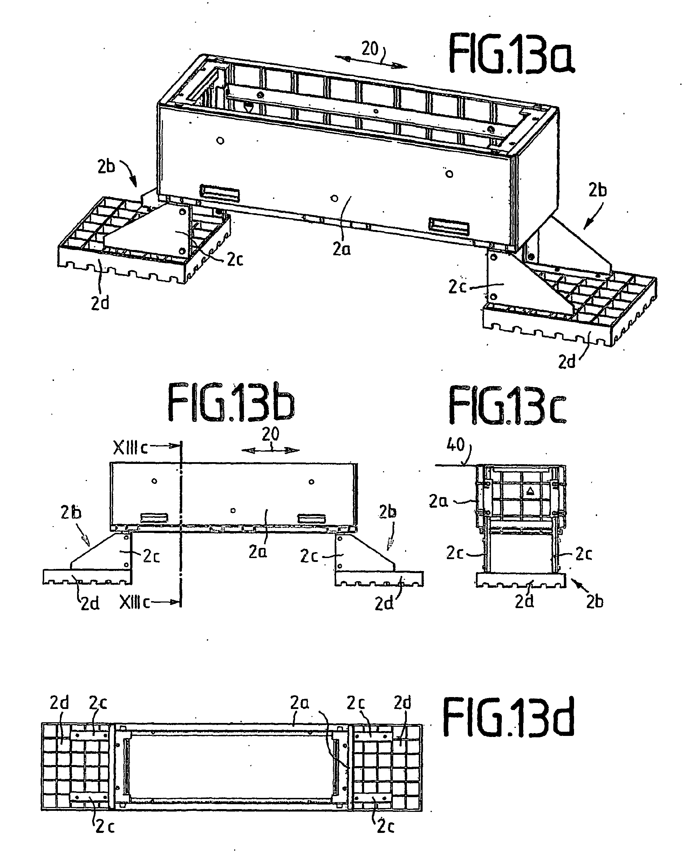

Fig. 13 zeigt den neuen Sockel 2, welcher aus mehreren Einzelteilen zusammengeschraubt ist:

Einerseits der hohle, also in der Aufsicht betrachtet durchgängige, Sockelkasten 2a, der in der Regel aus Kunststoff, Beton, einer Mischung aus beidem oder einem anderen nicht rostenden Material besteht. Unter dessen in Querrichtung 20, der größeren Quererstreckung des Sockelkastens 2a, außen liegenden Seitenbereichen sind Sockelfüße 2b befestigt, mit denen der Sockelkasten 2a auf dem Untergrund abgestellt wird, der bis zur gewünschten Höhe hin hierfür abgetragen wird.

Die Sockelfüße 2b bestehen aus Sockelfuß-Platten 2d aus vorzugsweise einem eigenstabilen Gitter, insbesondere einem Gitter aus verzinktem Stahlblech mit senkrecht stehenden Stegen oder aus einem Kunststoffgitter. Diese besitzen eine Breite entsprechend vorzugsweise exakt der horizontalen Tiefe, also Breite, des Sockelkastens 2a und stehen in Querrichtung 20 seitlich über den Sockelkasten 2a vor. Die Platten 2d reichen in der Aufsicht betrachtet nur entsprechend der Dicke der Seitenwände des Sockelkastens 2a unter diesen hinein, so dass der in der Aufsicht betrachtete Freiraum im Sockelkasten hierdurch nicht verkleinert wird.

In dieser Position sind die Platten 2d befestigt mit Hilfe von je zwei etwa dreieckigen Seitenteilen 2c, die mit einer ihrer beiden rechtwinkligen Außenkanten mit der Platte 2d, insbesondere mit deren Oberseite, verschraubt sind und mit dem sich verjüngenden oberen Bereich mit dem Sockelkasten 2a verbunden sind und so die Platten 2d unterhalb des Sockelkastens 2a und auf Abstand zu diesem positionieren.

Die Platten 2d dienen der Vergrößerung der Standfläche gegenüber der Grundfläche der in der Aufsicht nur schmalen umlaufenden Teile des - einstückigen oder vertikal oder horizontal geteilten, mehrstückigen Sockelkastens und können theoretisch statt an den in Querrichtung äußeren Schmalseiten auch an Vorder- und Rückseite nach außen vorstehen, oder auf allen vier Seiten. Das Ergebnis einer optimal großen Standfläche bei nur relativ geringem notwendigen Erdaushub um den alten Sockel herum ergibt sich jedoch bei Befestigung der Platten vorstehend in Querrichtung über die Seiten des Sockelkastens 2a.

Die Figuren 7 bis 12 zeigen die zunehmend komplettierten Aufbauphasen des neuen Korpus 3. Der Innenkorpus besitzt eine kubische form und ist eigenstabil aufgrund eines Korpusrahmens 16, der aus Kantenprofilen 17 zusammengesetzt, die an ihren Enden, insbesondere in den Ecken des Korpusrahmens 16, über entsprechende Eckverbinder miteinander verbunden, insbesondere verschraubt, sind.

Zusätzlich zu den Kantenprofilen 17 entlang der Kanten des kubusförmigen Innenkorpus 21 verlaufen Querstreben 34 horizontal umlaufend zwischen den senkrechten Streben im unteren Drittel des Korpusrahmens 16, gegenüber denen Justier-Schrauben 13 ebenfalls horizontal von Außen nach Innen gerichtet angeordnet sind.

Die Justier-Schrauben 13 sind dabei paarweise zueinander beabstandet an jeweils der in Querrichtung verlaufenden vorderen und hinteren Querstrebe 34 angeordnet, vorzugsweise auch je eine in der Mitte der quer zur Querrichtung 20 verlaufenden kurzen Querstreben.

Der Korpusrahmen 16 ist an den Seiten, an der Rückseite und an der Oberseite verschlossen durch - vorzugsweise EMV-dichte Platten, die vorzugsweise im Dickenbereich der Kantenprofile 17 liegen, so dass nur die Vorderseite, insbesondere dabei nur der oberhalb der Querstrebe 34 liegende Bereich, offen ist sowie die Basisfläche zwischen den unten umlaufenden Kantenprofilen 17.

Auf der oberen Beplankung liegend sind zwei Einschraub-Hebeösen 12 dargestellt, die bei Bedarf, nämlich für das Hochheben dieses Innenkorpus 21, in nach oben gerichtete, oben offene Innengewinde 22 zweier diagonal gegenüberliegender oberer Eckverbinder des Korpusrahmens 16 einschraubbar sind.

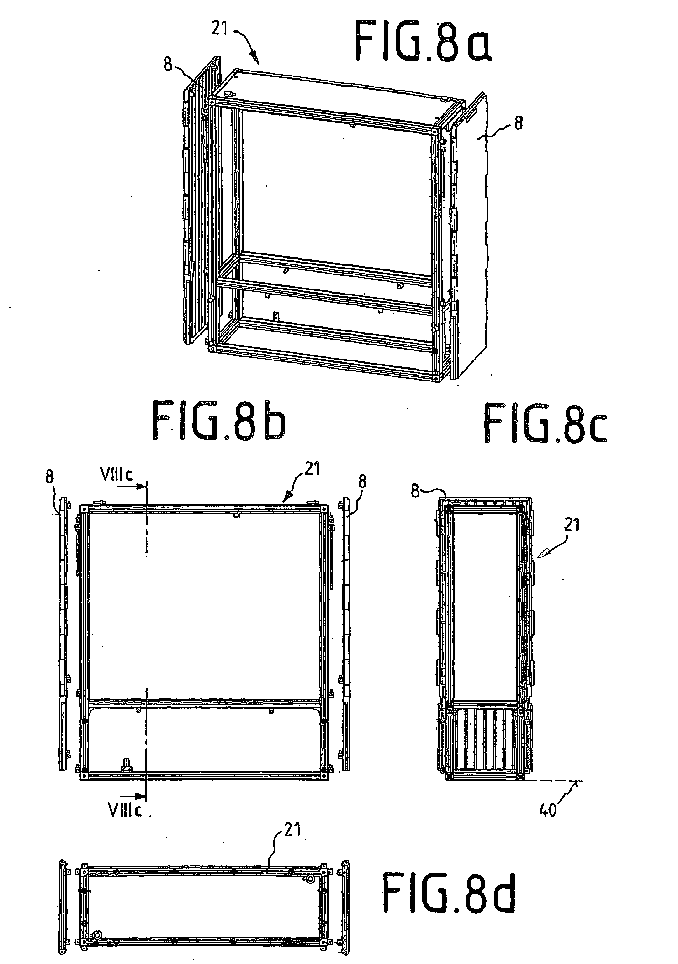

Die Fig. 8 zeigen demgegenüber einen Zustand, in dem der so beschriebene Innenkorpus 21 bereits mit Seitenwänden 8 ausgestattet wird, die von außen gegen die Seitenflächen des Innenkorpus 21 gesetzt und durch Absenken formschlüssig mit diesem verbunden oder auf andere Art und Weise befestigt werden.

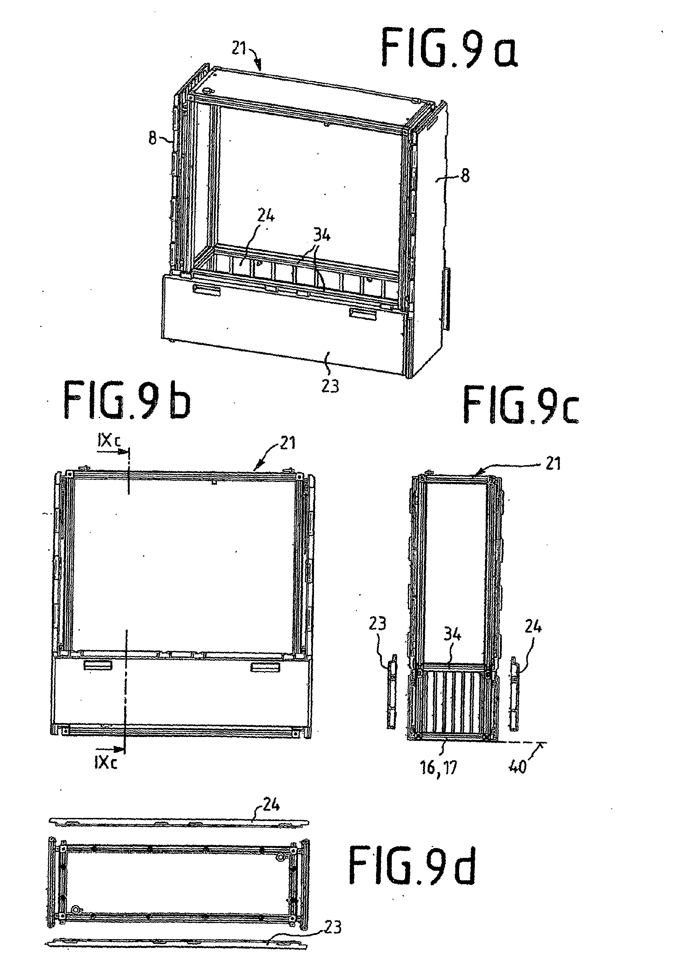

Fig. 9 zeigt einen Zustand, in dem gegenüber der Ausstattung gemäß Fig. 8 eine Frontklappe 23 und eine Heckklappe 24 - die vorzugsweise wie die Seitenwände 8 sowie der Rest der Verkleidung vorzugsweise aus Kunststoff bestehen - den vorderen und hinteren unteren Bereich den Innenkorpus 21 bedecken, indem sie ebenfalls vorzugsweise formschlüssig an diesen von außen aufgesetzt oder anderweitig befestigt sind und dadurch den Bereich von den im unteren Drittel umlaufenden Querstreben bis zu dem unteren Ende des Korpusrahmens 16 vorne und hinten verschließen, wogegen ja die Seitenwände 8 über die gesamte Höhe des Korpusrahmens 21 vorzugsweise durchgehen.

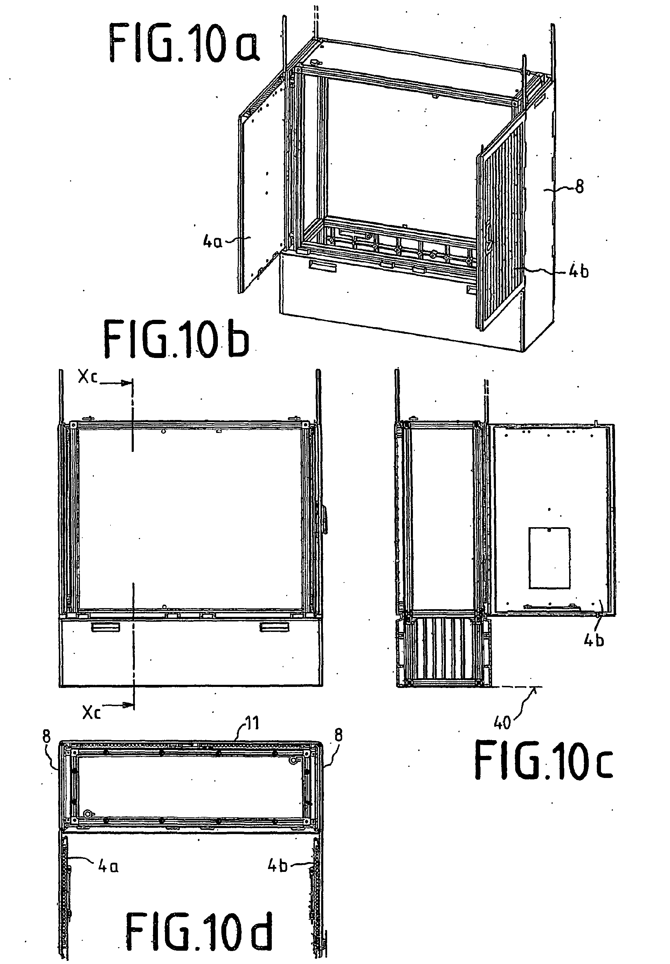

Die Fig. 10 zeigen einen Zustand, in dem der Innenkorpus 21 zusätzlich mit einer Rückwand 11 sowie frontseitigen Türen 4a, b ausgestattet ist. Die Türen 4a, b sind dabei an den Längsaußenkanten der Vorderseite in entsprechende Scharnieren als Schwenkachse eingehängt, während die Rückwand 11 wiederum von außen durch Einhängen von oben oder anderweitig befestigt wird.

Wie vor allem die Aufsichten 10d und 9d zeigen, sind Rückwand 11, Seitenwände 8 zum Innenkorpus 21 hin nach außen versetzt im Abstand - oben und unten offen - positioniert, so dass dazwischen Luft durch den Kamineffekt bedingt nach oben strömen kann.

Auch die Türen 4a, b sind aus dem gleichen Grund doppelwandig mit Durchgangsöffnungen von unten nach oben ausgebildet, wobei vorzugsweise die innere Wandung der Türen 4a, b wiederum EMV-dicht ausgebildet ist.

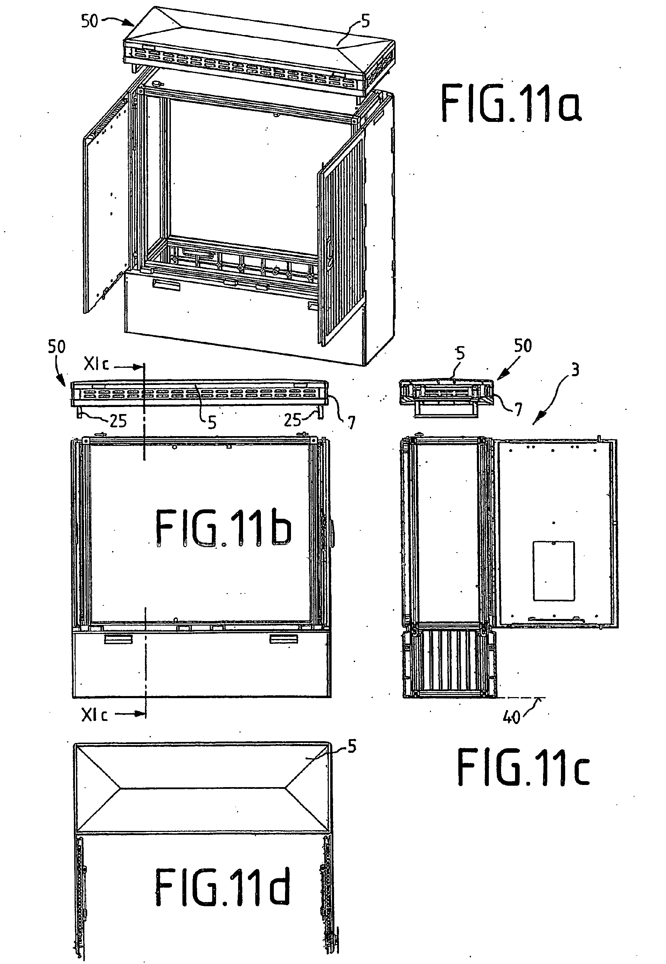

Die Fig. 11 zeigen den Zustand des Korpus 3 beim Komplettieren durch Aufsetzen des Dachmoduls 50, welches aus einem oberen Zwischenteil 7 und einem Deckel 5 besteht, und vorzugsweise nach unten ragende Fortsätze 25 zum Einschieben in den restlichen Korpus 3, insbesondere zwischen dessen Innenkorpus 21 und dessen äußerer Verkleidung und Verschraubung mit dem Innenkorpus 21, insbesondere dessen Korpusrahmen 16, dienen.

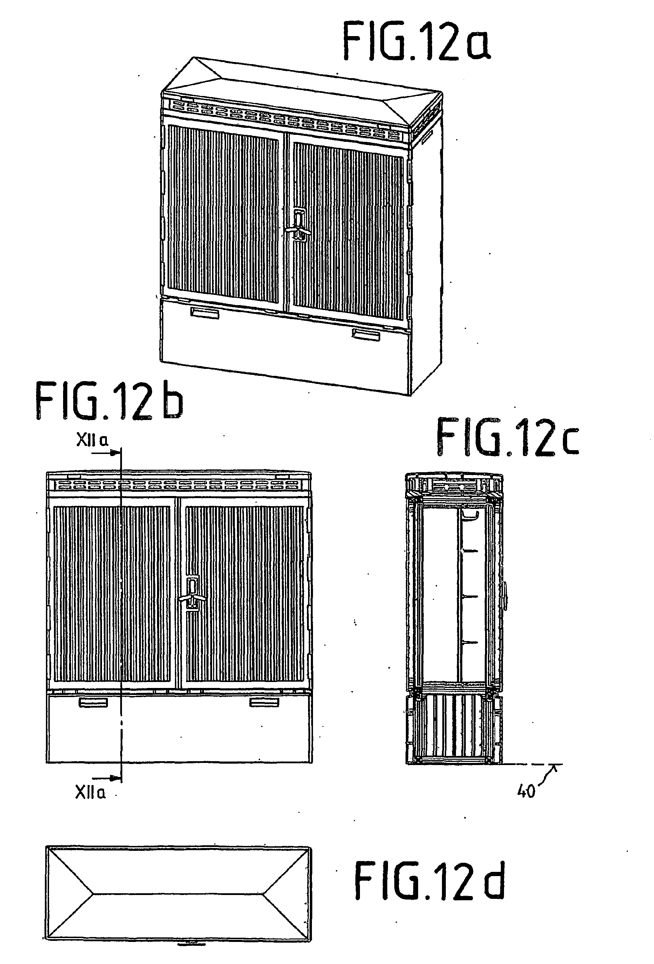

Da das Dachmodul 50 in der Aufsicht betrachtet über den Innenkorpus 21 hinausragt und auch Rückwand 11, Seitenwände 8 sowie die Türen 4a, b im geschlossenen Zustand überdeckt, verhindert das fixierte Dachmodul 50 - wie im Endzustand der Fig. 12 dargestellt - das Anheben dieser Teile nach oben und damit deren Entfernung vom Innenkorpus 21.

Die Fig. 1 zeigen das Überschieben des in den Fig. 13 dargestellten Sockels 2 über den alten, mit technischen bzw. elektrischen Funktionsteilen bestückten, Montagerahmen 6 und den ihn tragenden alten Sockel 2', mit welchem er über Befestigungsschrauben 18 verbunden ist.

Am alten Montagerahmen 6 sind aus Übersichtlichkeitsgründen die dort üblicherweise verschraubten und verdrahteten technischen bzw. elektrischen Funktionselemente nicht dargestellt, sondern es sind lediglich in der Sockelplatte 26 des Montagerahmens 6 die Kabeleinlässe 27 aus Übersichtlichkeitsgründen dargestellt. Die nicht dargestellten elektrischen Funktionsteile ragen in der Aufsicht betrachtet seitlich jedoch nicht über die Grundfläche des alten Sockels 2' hinaus, da sie ja vor dem Abnehmen des alten, hier nicht dargestellten Korpus, der auf dem Außenumfang des alten Sockels 2' aufsaß, von diesem umschlossen waren.

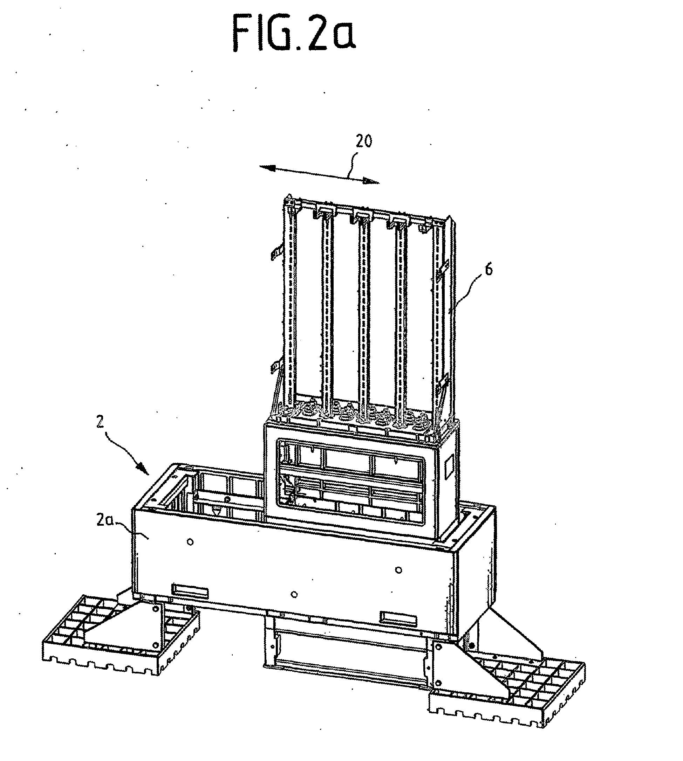

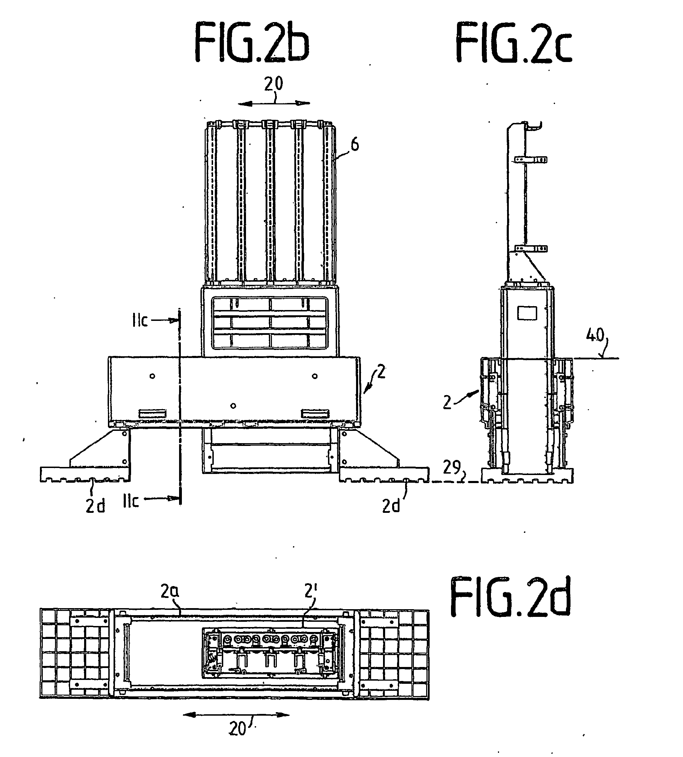

Die Fig. 2 zeigen nach dem Überstülpen des neuen Sockels 2 dessen auf dem Untergrund abgesetzte Endposition. Wie vor allem die Fig. 2b zeigt, ist der neue Sockel 2 wesentlich weniger hoch als der alte Sockel 2'. Da am alten Sockel 2' die Erdgleiche, also das normalerweise vorhandene Niveau der Erdoberfläche, erkennbar ist, wird um den alten Sockel 2' herum, insbesondere in Querrichtung seitlich des alten Sockels 2', das Erdreich so tief entfernt, dass im entfernten Bereich der neue Sockel 2 mit seinen Aufstands-Platten 2d auf dem so entstandenen neuen Standniveau 29 aufgestellt werden kann, welches so gewählt ist, dass sich die Oberkante des neuen Sockels 2 auf Höhe der vorherigen Erdgleiche 40 befindet.

Je nach Eintauchtiefe des alten Sockels 2' kann dieses neue Standniveau wie in den Fig. 2 dargestellt knapp unterhalb des Standniveaus des alten Sockels 2' oder auch darüber liegen, wobei vorzugsweise das neue Standniveau 29 so gewählt wird, dass es sich oberhalb des alten Standniveau befindet, um den alten Sockel 2' nicht vollständig freigraben zu müssen, was die Stabilität des alten Sockels 2' und damit des alten Schaltschrankes während der Umbauarbeiten reduziert.

Dabei besteht die Möglichkeit, die Höhe des neuen Sockels 2 zu variieren durch unterschiedlich hohe Sockel-Seitenteile 2c.

Die Aufsicht der Fig. 2d zeigt ferner, dass die in der Aufsicht betrachtete Breite des neuen Sockels, also quer zu dessen Quererstreckung 20, nur so groß ist, dass der innere, überstülpfähige Freiraum des neuen Sockels 2, also insbesondere dessen Sockelkasten 2a, gerade etwas größer ist als die äußere Breite des alten Sockels 2'.

In Querrichtung 20 kann der neue Sockel 2 ebenfalls knapp über den alten Sockel 2' passen oder - wie in den Fig. 2 dargestellt - wesentlich größer sein, um neben dem alten Montagerahmen 6 später Platz für einen neuen Montagerahmen zu schaffen. Aus diesem Grund wird der neue Sockel 2 dann so über den alten Sockel 2' gestülpt, dass dieser mit einer seiner Seiten nahe am seitlichen (rechten oder linken) Innenumfang des neuen Sockels 2, insbesondere dessen Sockelkasten 2a, anliegt, und der zusätzliche Innenraum somit nur auf einer Seite des alten Montagerahmens 6, also in einem Stück, verfügbar wird.

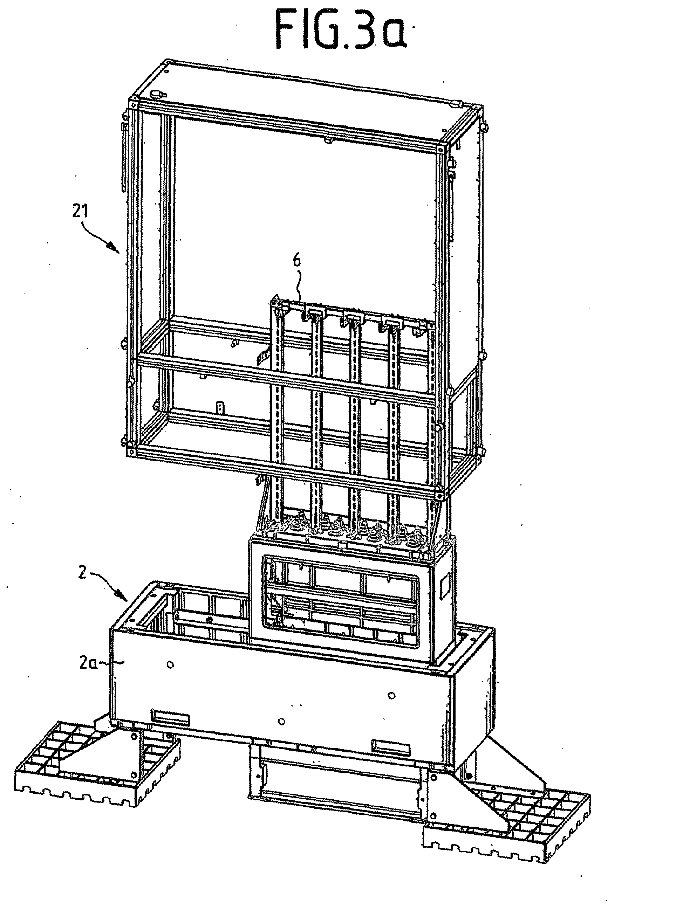

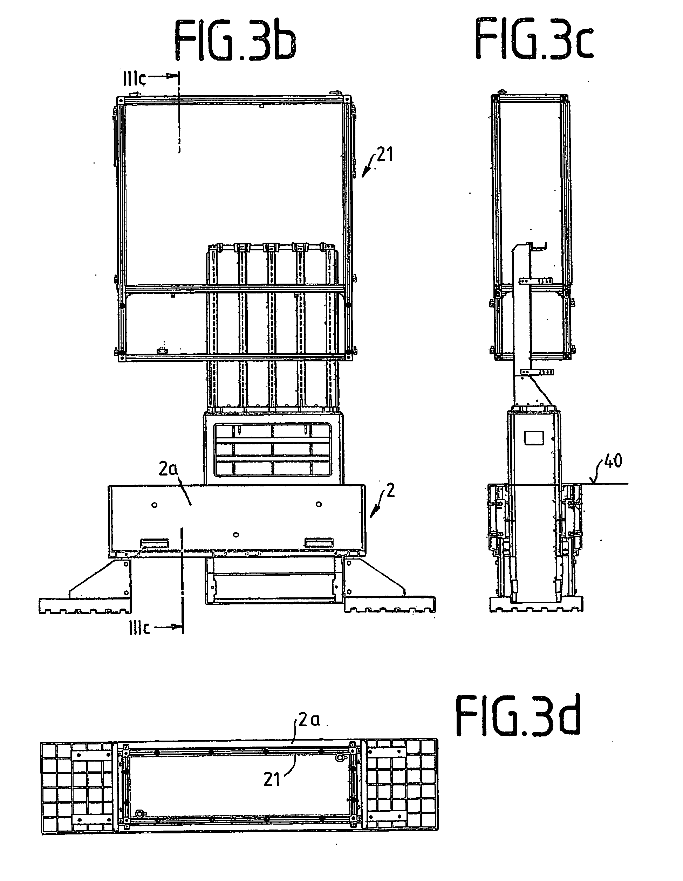

Nachdem auf diese Weise der neue Sockel 2 abgesetzt und auf der richtigen Höhe horizontal ausgerichtet wird, wird gemäß den Fig. 3 der neue Korpus 3, insbesondere nur dessen Innenkorpus 21, wie in den Fig. 3 dargestellt, von oben - vorzugsweise an einem Kranhaken hängend - über den alten Montagerahmen 6 gestülpt, so dass dieser von dem neuen Innenkorpus 21 vollständig umgeben wird. Der neue Korpus 3, insbesondere dessen Innenkorpus 21, wird dabei abgesenkt, bis er auf der Oberseite des neuen Sockels 2 aufsteht, und anschließend mit diesem verschraubt mittels Befestigungsschrauben 18.

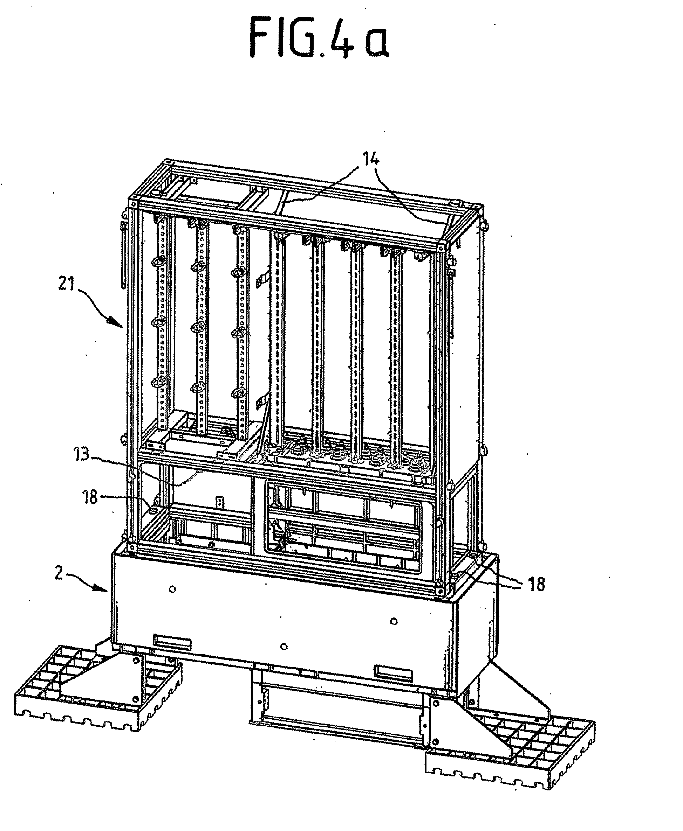

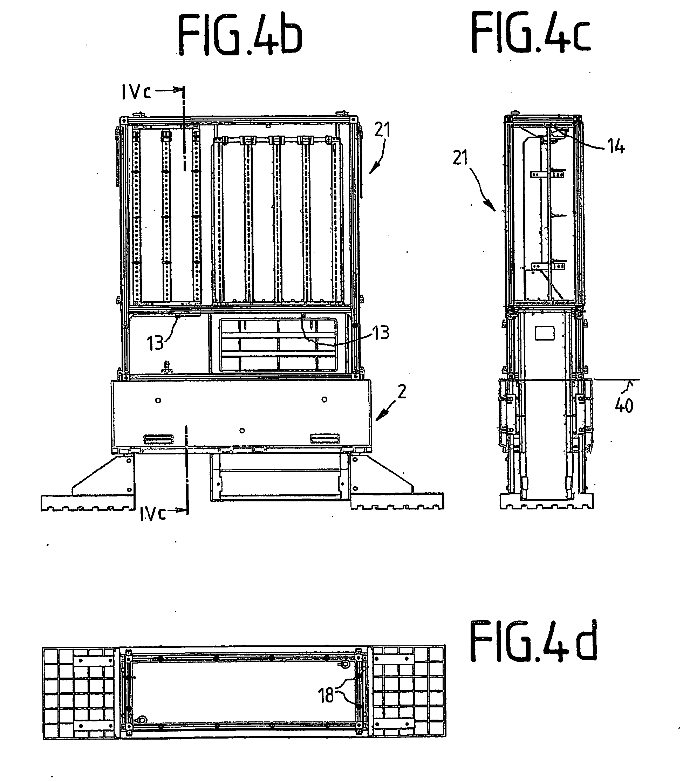

Vorzugsweise ragt dabei - in der Aufsicht betrachtet - der Innenkorpus 21 nicht seitlich über den Außenumfang des Sockelkastens 2a hinaus, wie anhand der Fig. 4 nach Befestigung mittels der Befestigungsschrauben 18 zwischen Innenkorpus 21 und neuem Sockel 2 zu erkennen.

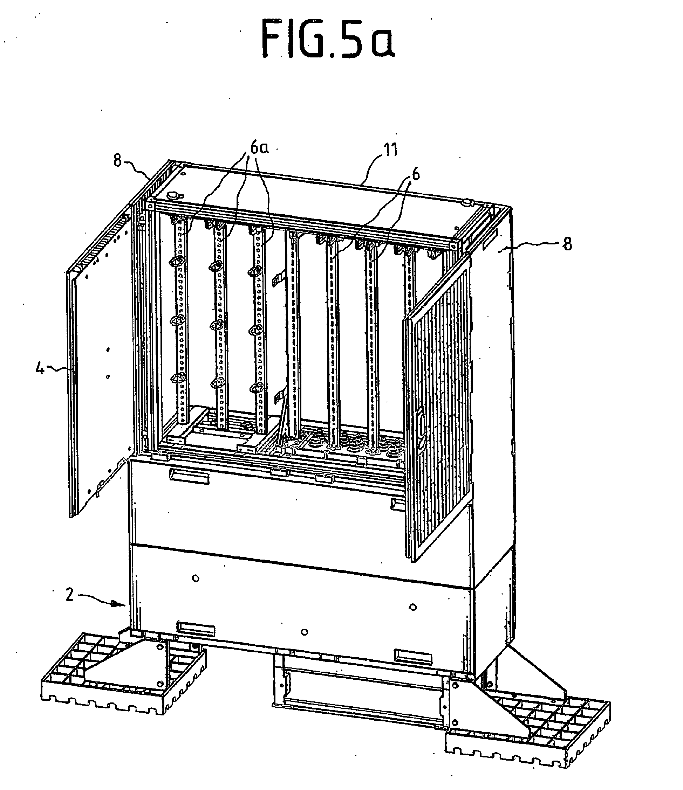

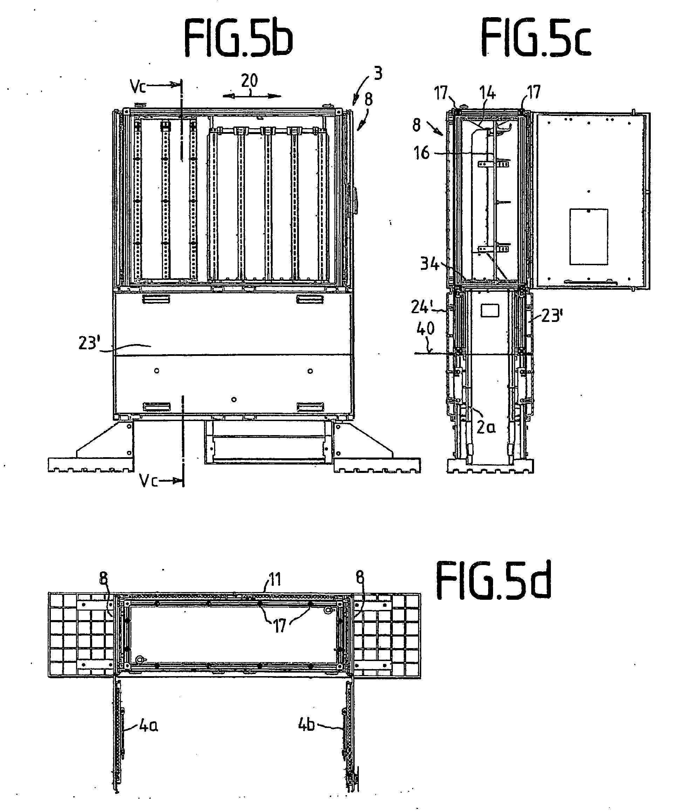

Fig. 5 zeigt den Zustand des neuen Korpus 3 analog der Fig. 10, also mit angebrachter Außenverkleidung am Innenkorpus 21 in Form der Seitenwände 8, der Rückwand 11 und der außen angeschlagenen beiden Fronttüren 4a, b. Wie vor allem die Frontansicht der Fig. 5b und die Aufsicht der Fig. 5d zeigen, ist der Außenumfang des so ausgestatteten neuen Korpus 3 größer als der Außenumfang des neuen Sockelkastens 2a, so dass die Seitenwände 8 über die gesamte Höhe des Innenkorpus 21 als auch des Sockelkastens 2a durchgehen, und auch die verwendete Frontklappe 23' als auch die Heckklappe 24' nicht nur den unteren Bereich des Innenkorpus 21, also von den Querstreben 34 abwärts, sondern auch den darunter liegenden Teil des neuen Sockelkastens 2a hinsichtlich der Höhe überdecken.

Fig. 5a zeigt ferner den neuen Montagerahmen 6a, der seitlich anschließend an den alten Montagerahmen 6 anschließend im Innenkorpus 21 des neuen Korpus 3 befestigt ist, was gemäß der Fig. 4a bereits vor dem Überstülpen des neuen Innenkorpus 21 bzw. des neuen Korpus 3 erfolgen kann oder auch anschließend.

Ebenso kann - abweichend von den Fig. 1 bis 6 - der Innenkorpus 21 bereits beplankt mit Seitenwänden, Rückwand und Frontklappe sowie Heckklappe übergestülpt werden, also indem in den Fig. 5 ersichtlichen Zustand.

Die Fig. 5, insbesondere Fig. 5c zeigt ferner die Fixierung des alten Montagerahmens 6, vor allem im oberen Bereich - mit dem neuen Korpus 3, was vorzugsweise mittels Verschrauben eines Stück eines Lochbandes 14, welches vorzugsweise aus Metall oder Kunststoff besteht, erfolgt, dessen mittlerer Bereich am z. B. oberen Ende des alten Montagerahmens 6 verschraubt wird, und dessen schräg nach oben vorne und hinten weisende Enden mit dem vorderen und hinteren, in Querrichtung 20 verlaufenden Kantenprofilen 17 des Korpusrahmens 16 verschraubt werden, vorzugsweise durch Verschraubung an Nutensteinen 17, die in entsprechenden hinterschnittenen Nuten entlang dieser Kantenprofile 17 verschiebbar sind.

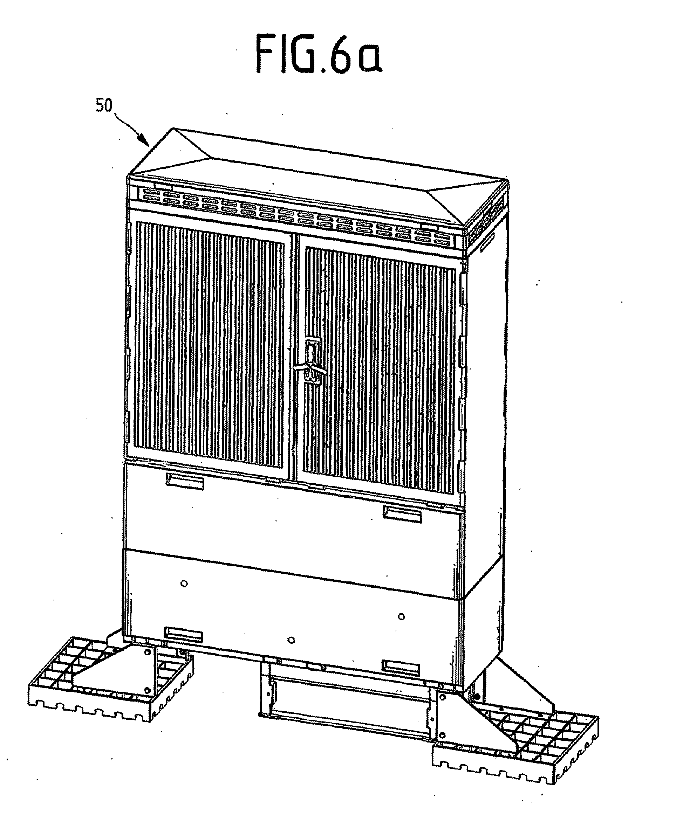

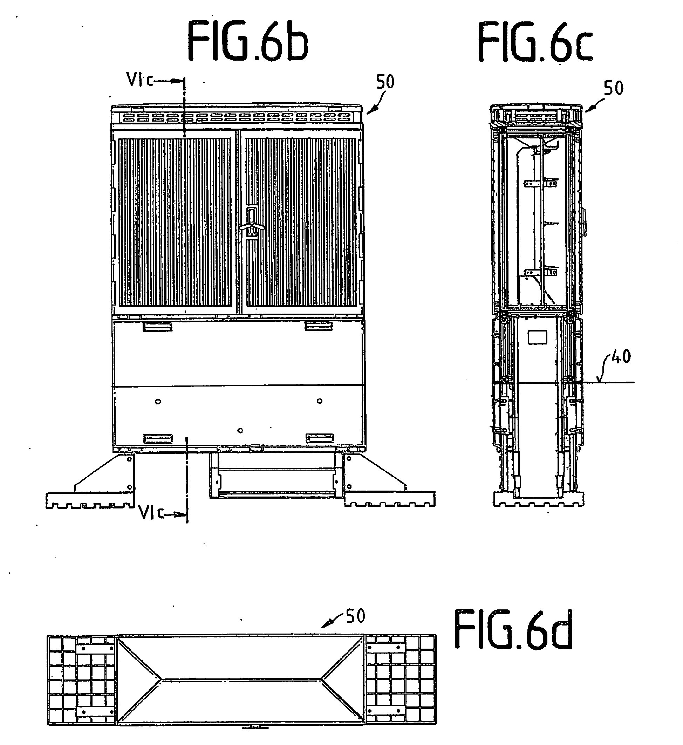

Fig. 6 trägt den Endzustand, also - nachdem die Hebeösen 12 wieder entfernt worden sind - nach dem Aufsetzen des Dachmoduls 50 auf die Oberseite des restlichen neuen Korpus 3 und Verbindung mit dieser.

### BEZUGSZEICHENLISTE

- 1: Verteilerschrank
- 2, 2': Sockel
- 2a: Sockelkasten
- 2b: Sockelfuß
- 2c: Sockel-Seitenteil
- 2d: Sockelplatte
- 3, 3': Korpus
- 4: Tür
- 5: Deckel
- 6: Montagerahmen
- 7: oberes Zwischenteil
- 8: Seitenwand
- 9: Baugruppenträger
- 10: vertikale Längsrichtung
- 11: Rückenwand
- 12: Hebeöse
- 13: Justier-Schraube
- 14: Lochband
- 15: Nutenstein
- 16: Korpusrahmen
- 17: Kantenprofil
- 18,18': Befestigungsschraube
- 19: Metallfolie
- 20: Querrichtung
- 21: Innenkorpus
- 22: Innengewinde
- 23,23': Frontklappe
- 24,24': Heckklappe
- 25: Fortsätze
- 26: Sockelplatte
- 27: Kabeleinlaß
- 28: Leitungen
- 29: neues Standniveau
- 34: Querstreben
- 40: Erdgleiche
- 50: Dachmodul

## Patentansprüche

1. Verfahren zur Erweiterung des Montageraums eines im Freien aufgestellten Verteilerschrankes (1) aufweisend einen Korpus (3'), einen eingegrabenen Sockel (2') und einen Montagerahmen (6),
**dadurch gekennzeichnet, dass**
- der Korpus (3') des Verteilerschranks entfernt wird,
- ein in Aufsicht betrachtet hohler neuer Sockel (2) über den Montagerahmen (6) und den alten Sockel (2') gestülpt und auf dem Untergrund abgesetzt und ausgerichtet wird, wobei der innere, überstülpfähige Freiraum des neuen Sockels (2) größer als die äußere Breite des alten Sockels (2') ist,
- ein neuer Korpus (3) von oben über den alten Montagerahmen gestülpt, auf dem neuen Sockel (2) angeordnet, ausgerichtet und befestigt wird, wobei der neue Korpus (3) einen größeren Innenraum besitzt wie der alte Korpus (3').

2. Verfahren nach Anspruch 1, **dadurch gekennzeichnet, dass** vor dem Überstülpen des neuen Sockels (2) das Erdreich um den alten Sockel (2') herum abgetragen wird, insbesondere bis hinab zur Unterkante des alten Sockels (2').

3. Verfahren nach einem der vorhergehenden Ansprüche, **dadurch gekennzeichnet, dass** vor dem Überstülpen des neuen Sockels (2) dieser zusammengebaut wird aus dem in der Aufsicht hohlen Sockelkasten (2a) und unter den Sockelkasten (2a), insbesondere unter dessen Seitenteilen, montierten, insbesondere seitlich überstehenden, Sockelfüßen (26).

4. Verfahren nach einem der vorhergehenden Ansprüche, **dadurch gekennzeichnet, dass** während des Vergrößerns des Montageraums die elektrischen Einbauten des Schaltschrankes (1) in Betrieb bleiben.

5. Verfahren nach einem der vorhergehenden Ansprüche, **dadurch gekennzeichnet, dass** vor dem Überstülpen bei dem neuen Gehäuse das Dachmodul (50) entfernt und in der Oberseite des restlichen Korpus Hebeösen (12) angebracht, insbesondere eingeschraubt, werden.

6. Verfahren nach einem der vorhergehenden Ansprüche, **dadurch gekennzeichnet, dass** vor dem Überstülpen bei dem neuen Gehäuse die verkleidenden Türen (4), Seitenwände (8) und/oder Rückwand (11) entfernt und vor Beendigung der Arbeiten wieder angesetzt werden.

7. Verfahren nach einem der vorhergehenden Ansprüche, **dadurch gekennzeichnet, dass** nach dem Anbringen der Verkleidung am neuen Korpus die Hebeösen (12) entfernt und das Dachmodul (50) aufgesetzt und fixiert wird.

8. Verfahren nach Anspruch 7, **dadurch gekennzeichnet, dass** das Dachmodul (50) fixiert wird, indem das Dachmodul (50) mit seiner Unterkante im aufgesetzten Zustand die Seitenwände (8) und die Rückwand (11) außen übergreift.

9. Verfahren nach Anspruch 8 oder 9, **dadurch gekennzeichnet, dass** das Dachmodul (50) formschlüssig gegenüber dem Innenkorpus (21), der vorzugsweise aus einem Korpusrahmen besteht, fixiert wird.

10. Verfahren nach Anspruch 9, **dadurch gekennzeichnet, dass** das Dachmodul (50) gegenüber dem Innenkorpus (21) durch Einschieben von Sicherungsstäben im Zwischenraum zwischen dem Innenkorpus (21) und der Seitenwand (8) bei geöffneten Türen (4) horizontal von vorne her fixiert wird, wobei der Sicherungsstab Sicherungsfortsätze sowohl des Dachmoduls (50) als auch des Innenkorpus (21) durchdringt und damit formschlüssig miteinander verbindet.

11. Verfahren nach einem der vorhergehenden Ansprüche, **dadurch gekennzeichnet, dass** nach dem Überstülpen des neuen Korpus (3) und vor dem Anbringen dessen Verkleidung das neue Gehäuse relativ zum alten Montagerahmen (6) und/oder zum alten Sockel (2') mechanisch fixiert wird.

12. Verfahren nach einem der vorhergehenden Ansprüche, **gekennzeichnet durch** das Einschrauben von Justier-Schrauben (13) **durch** den neuen Korpus gegen den oberen Bereich des alten Sockels (2') und Abstützen der Justier-Schrauben (13) an diesem alten Sockel.

13. Verfahren nach einem der vorhergehenden Ansprüche, **gekennzeichnet durch** das Spannen eines Lochbandes (14) zwischen insbesondere dem oberen Bereich des alten Montagerahmens (6) und dem oberen Bereich des neuen Korpus (3), insbesondere **durch** das Befestigen des Lochbandes (14) mittels in Längsrichtung in den Kanten-Profilen des neuen Korpus (3) verschiebbaren Nutensteinen (15).

14. Verfahren nach einem der vorhergehenden Ansprüche, **dadurch gekennzeichnet, dass** vor der mechanischen Fixierung des neuen Korpus (3) gegenüber dem alten Sockel (2') und/oder dem alten Montagerahmen (6), insbesondere unmittelbar nach dem Entfernen des alten Korpus (3'), die Befestigungsschrauben (18) zwischen dem alten Montagerahmen (6) und dem alten Sockel (2') gelöst, insbesondere abgerissen, werden.

15. Verfahren nach einem der vorhergehenden Anspruche, **dadurch gekennzeichnet, dass** nach dem Überstülpen des neuen Korpus (3) der in der Aufsicht betrachtete Freiraum zwischen dem in Umfang des neuen Korpus (3) und dem Außenumfang des alten Sockels (2'), insbesondere der Oberkante des alten Sockels (2'), EMV-dicht verschlossen wird, insbesondere durch einen Streifen aus Metallfolie (11), insbesondere selbstklebenden Streifen.

16. Verfahren nach einem der vorhergehenden Ansprüche, **dadurch gekennzeichnet, dass** nach dem Überstülpen des neuen Korpus (3), insbesondere nach der mechanischen Fixierung gegenüber dem alten Montagerahmen (6), der zusätzliche Montagerahmen und/oder die zusätzliche Einbauten im neuen Korpus (3) eingebaut und elektrisch angeschlossen werden, wobei die Abschaltung der elektrischen Einbauten des alten Montagerahmens (6) vorzugsweise nur während des Anschlusses der neuen Einbauten erfolgt.

17. Bausatz für eine neue Schaltschrank-Einheit, die nach dem Verfahren von Anspruch 1 über einen bereits bestehenden Sockel und einem an diesem Sockel angebrachten Montagerahmen (6) überstülpbar ist, mit einem in Aufsicht betrachtet hohlen Sockel (2), einem Korpus (3), wenigstens einem Dachmodul (50). Seitenwänden (8), einer Rückwand (11) und wenigstens einer Tür (4a,b), um den Korpus (3) zu verkleiden und wenigstens einer Hebeöse (12), der Sockel (2) aus miteinander verbundenen Teilen, nämlich wenigstens einem in der Aufsicht hohlen Sockel-Kasten (2a) und darunter angeordneten Sockelfüßen (26) besteht, **dadurch gekennzeichnet, dass** die Sockelfüße (26), die seitlich über den Sockel-Kasten (2a) vorstehen, wobei die Sockelfüße aus Sockelfuß-Seitenteilen (2c) und einer Sockelfuß-Platte (2d) bestehen, wobei die Platten (2d) in der Aufsicht betrachtet nur entsprechend der Dicke der Seitenwände des Sockelkastens (2a) unter diesen hinein reichen, so daß der in der Aufsicht betrachtete Freiraum im Sockelkasten hierdurch nicht verkleinert wird.

18. Bausatz nach Anspruch 17, **dadurch gekennzeichnet, dass** der Bausatz wenigstens eine Befestigungsvorrichtung, insbesondere Lochbänder (14), zum Fixieren des alten Montagerahmens (6) am neuen Korpus (3) umfasst.

19. Bausatz nach einem der Ansprüche 17 oder 18, **dadurch gekennzeichnet, dass** der Bausatz Justier-Schrauben (13) zur Einstellung des Abstandes zwischen dem neuen Korpus (3) und dem alten Sockel (2') und/oder dem alten Montagerahmen (6) umfasst.

20. Bausatz nach einem der Ansprüche 17 bis 19, **dadurch gekennzeichnet, dass** der Bausatz eine Sockelverkleidung für den alten Sockel, insbesondere wenigstens eine frontseitige Sockelverkleidung, umfasst.

21. Bausatz nach einem der gehenden Ansprüche 17 bis 20, **dadurch gekennzeichnet, dass** der neue Korpus (3) eine EMV-Abschirmung umfasst.

22. Bausatz nach einem der Ansprüche 17 bis 21, **dadurch gekennzeichnet, dass** der neue Sockel (2) eine geringere Höhe als der alte Sockel (2') aufweist.

23. Bausatz nach einem der Ansprüche 17 bis 22, **dadurch gekennzeichnet, dass** der neue Korpus (3) einen Korpus-Rahmen (16) aus Profilen (17), insbesondere Metall-Profilen, entlang der Kanten des kubischen Gehäuses, nach innen zurückversetzt, umfasst und insbesondere horizontal umlaufende Querstreben (34) auf der Höhe des Überganges zwischen dem alten Sockel und dem alten Montagerahmen (6) vorhanden sind.

24. Bausatz nach einem der Ansprüche 17 bis 23, **dadurch gekennzeichnet, dass** die Höhenlage der Querstreben (34) gegenüber dem neuen Korpus (3) einstellbar ist.

25. Bausatz nach einem der Ansprüche 17 bis 24, **dadurch gekennzeichnet, dass** in den vorderen und hinteren und/oder seitlichen Querstreben (34) horizontal durchdringende Durchgangs-Gewindebohrungen zum einschrauben von Justierschrauben (13) vorhanden sind.

26. Bausatz nach einem der Ansprüche 17 bis 25, **dadurch gekennzeichnet, dass** in den Streben des Korpus-Rahmens (16), insbesondere in den oben horizontal umlaufenden Streben, hinterschnittene Nuten mit eingelegten Nuten-Steinen (15) vorhanden sind, welche Innengewinde zum einschrauben von Befestigungsvorrichtungen, insbesondere Lochbändern (14), umfasst.

27. Bausatz nach einem der Ansprüche 17 bis 26, **dadurch gekennzeichnet, dass** die Seitenwand (11) und/oder die Rückwand (8) des neuen Korpus (3) über dessen gesamte Höhe durchgehen.

28. Bausatz nach einem der Ansprüche 17 bis 27, **dadurch gekennzeichnet, dass** Befestigungsvorrichtungen, insbesondere Innengewinde, in der Oberseite des nach Abnahme des Dachmoduls (50) restlichen neuen Korpus (3), insbesondere an wenigstens zwei einander diagonal gegenüberliegenden, Ecken, insbesondere im Gehäuserahmen vorgesehen sind.

29. Bausatz nach einem der Ansprüche 17 bis 28, **dadurch gekennzeichnet, dass** der Bausatz EMV-Abdichtungsstreifen, insbesondere in Form einer selbstklebenden Metallfolie (14), insbesondere Alufolie, insbesondere in Form eines mit Metallfolie beschichteten Bitumen-Bandes, umfasst.

## Claims

1. Method for increasing in size the installation space of a distribution cabinet (1) set up outdoors, having a body (3'), a base (2') buried in the ground and an installation frame (6), **characterized in that**
- the body (3') of the old distribution cabinet is removed,
- a new base (2), which is hollow when viewed in plan view, is slipped over the installation frame (6) and the old base (2') and set down on the underlying ground and aligned, the inner, free space of the new base (2) that can be slipped over being greater than the outer width of the old base (2'),
- a new body (3) is slipped from above over the old installation frame, and is arranged, aligned and fastened on the new base (2), the new body (3) having a larger interior space than the old body (3').

2. Method according to Claim 1, **characterized in that**, before the new base (2) is slipped over, the ground around the old base (2') is removed, in particular down to the lower edge of the old base (2').

3. Method according to one of the preceding claims, **characterized in that**, before the new base (2) is slipped over, it is assembled from the base box (2a), which is hollow in plan view, and base feet (26), which protrude in particular laterally, mounted under the base box (2a), in particular under its side parts.

4. Method according to one of the preceding claims, **characterized in that** the electrical components enclosed by the switch cabinet (1) remain in operation while the installation space is being increased in size.

5. Method according to one of the preceding claims, **characterized in that**, before the slipping-over operation, the roof module (50) is removed from the new housing and the lifting lugs (12) are attached, in particular screwed in, in the upper side of the remaining body.

6. Method according to one of the preceding claims, **characterized in that**, before the slipping-over operation, the cladding doors (4), side walls (8) and/or rear wall (11) are removed from the new housing and are replaced before completion of the work.

7. Method according to one of the preceding claims, **characterized in that**, after the cladding has been fitted on the new body, the lifting lugs (12) are removed and the roof module (50) is placed on and fixed.

8. Method according to Claim 7, **characterized in that** the roof module (50) is fixed **in that** the roof module (50) in the placed-on state engages with its lower edge from the outside over the side walls (8) and the rear wall (11).

9. Method according to Claim 7 or 8, **characterized in that** the roof module (50) is positively fixed with respect to the inner body (21), which preferably comprises a body frame.

10. Method according to Claim 9, **characterized in that** the roof module (50) is fixed with respect to the inner body (21) by pushing in securing bars horizontally from the front in the intermediate space between the inner body (21) and the side wall (8) with the doors (4) open, the securing bar passing through securing continuations both of the roof module (50) and of the inner body (21) and consequently positively connecting them to one another.

11. Method according to one of the preceding claims, **characterized in that**, after the new body has been slipped over and before its cladding is fitted, the new housing is mechanically fixed in relation to the old installation frame (6) and/or the old base (2').

12. Method according to one of the preceding claims, **characterized by** the screwing in of adjusting screws (13) through the new body toward the upper region of the old base (2') and supporting the adjusting screws (13) on this old base.

13. Method according to one of the preceding claims, **characterized by** the clamping of a perforated strip (14) between in particular the upper region of the old installation frame (6) and the upper region of the new body (3), in particular by the fastening of the perforated strip (14) by means of sliding blocks (15), which are displaceable in the longitudinal direction in the edge profiles of the new body (3).

14. Method according to one of the preceding claims, **characterized in that**, before the mechanical fixing of the new body (3) with respect to the old base (2') and/or the old installation frame (6), in particular immediately after removal of the old body (3'), the fastening screws (18) between the old installation frame (6) and the old base (2') are loosened, in particular extracted.

15. Method according to one of the preceding claims, **characterized in that**, after the new body (3) has been slipped over, the free space, when viewed in plan view, between the inner periphery of the new body (3) and the outer periphery of the old base (2'), in particular the upper edge of the old base (2'), is closed in an EMC-proof manner, in particular by a strip of metal foil (11), in particular a self-adhesive strip.

16. Method according to one of the preceding claims, **characterized in that**, after the new body (3) has been slipped over, in particular after the mechanical fixing with respect to the old installation frame (6), the additional installation frame and/or the additional components are installed in the new body (3) and electrically connected, the disconnection of the electrical components of the old installation frame (6) preferably taking place only during the connection of the new components.

17. Construction kit for a new switch cabinet unit which, by the method of Claim 1, can be slipped over an already existing base and an installation frame (6) attached to it, with a base (2), which is hollow when viewed in plan view, a body (3), at least one roof module (50), side walls (8), a rear wall (11) and at least one door (4a,b), to clad the body (3), and at least one lifting lug (12), the base (2) comprises parts connected to one another, namely at least one base box (2a) which is hollow in plan view and base feet (36) arranged thereunder, **characterized in that** the base feet (26) protrude laterally beyond the base box (2a), the base feet comprising base foot side parts (2c) and a base foot plate (2d), the plates (2d) when viewed in plan view only reaching in a way corresponding to the thickness of the side walls of the base box (2a) below and into the latter, so that the free space viewed in plan view in the base box is not reduced in size as a result.

18. Construction kit according to Claim 17, **characterized in that** the construction kit comprises at least one fastening device, in particular perforated strips (14), for fixing the old installation frame (6) to the new body (3).

19. Construction kit according to one of Claims 17 or 18, **characterized in that** the construction kit comprises adjusting screws (13) for setting the distance between the new body (3) and the old base (2') and/or the old installation frame (6).

20. Construction kit according to one of Claims 17 to 19, **characterized in that** the construction kit comprises base cladding for the old base, in particular at least one front base cladding.

21. Construction kit according to one of the preceding Claims 17 to 20, **characterized in that** the new body (3) comprises an EMC shielding.

22. Construction kit according to one of Claims 17 to 21, **characterized in that** the new base (2) has a smaller height than the old base (2').

23. Construction kit according to one of Claims 17 to 22, **characterized in that** the new body (3) comprises a body frame (16) of profiles (17), in particular metal profiles, along the edges of the cubic housing, set back inward, and, in particular, there are cross struts (34) running horizontally around the periphery at the height of the transition between the old base and the old installation frame (6).

24. Construction kit according to one of Claims 17 to 23, **characterized in that** the vertical position of the cross struts (34) with respect to the new body (3) can be set.

25. Construction kit according to one of Claims 17 to 24, **characterized in that** there are threaded through-bores, passing horizontally through the front and rear and/or lateral cross struts (34), for screwing in adjusting screws (13).

26. Construction kit according to one of Claims 17 to 25, **characterized in that** there are in the struts of the body frame (16), in particular in the struts running around horizontally at the top, undercut grooves with inserted sliding blocks (15), which comprises internal threads for screwing in fastening devices, in particular perforated strips (14).

27. Construction kit according to one of Claims 17 to 26, **characterized in that** the side wall (11) and/or the rear wall (8) of the new body (3) extends over the entire height of the latter.

28. Construction kit according to one of Claims 17 to 27, **characterized in that** fastening devices, in particular internal threads, are provided in the upper side of the new body (3) remaining after removal of the roof module (50), in particular at at least two corners that lie diagonally opposite each other, in particular in the housing frame.

29. Construction kit according to one of Claims 17 to 28, **characterized in that** the construction kit comprises EMC sealing strips, in particular in the form of a self-adhesive metal foil (14), in particular aluminium foil, in particular in the form of a bitumen strip covered with metal foil.

## Revendications

1. Procédé pour élargir l'espace de montage d'une armoire de distribution (1) exposée à l'air libre, présentant un corps (3'), un socle enterré (2') et un cadre de montage (6),
**caractérisé en ce que**
- le corps (3') de l'armoire de distribution est enlevé,
- un nouveau socle (2) creux vu de dessus est posé par-dessus le cadre de montage (6) et le socle ancien (2') et est déposé et orienté sur le subjectile, l'espace libre intérieur du nouveau socle (2) pouvant être posé par-dessus étant plus grand que la largeur extérieure du socle ancien (2'),
- un nouveau corps (3) est posé depuis le haut par-dessus le cadre de montage ancien, disposé sur le nouveau socle (2), orienté et fixé, le nouveau corps (3) possédant un espace intérieur plus grand que l'ancien corps (3').

2. Procédé selon la revendication 1, **caractérisé en ce qu'**avant de poser le nouveau socle (2), la terre est enlevée tout autour de l'ancien socle (2'), notamment jusqu'en dessous du bord inférieur de l'ancien socle (2').

3. Procédé selon l'une quelconque des revendications précédentes, **caractérisé en ce qu'**avant la pose du nouveau socle (2), celui-ci est assemblé à partir de la caisse de socle (2a) creuse en vue de dessus et des pieds du socle (26) montés en dessous de la caisse de socle (2a), notamment sous ses parties latérales, notamment avec un dépassement latéral.

4. Procédé selon l'une quelconque des revendications précédentes, **caractérisé en ce que** pendant l'augmentation de l'espace de montage, les composants électriques intégrés dans l'armoire de distribution (1) continuent de fonctionner.

5. Procédé selon l'une quelconque des revendications précédentes, **caractérisé en ce qu'**avant la pose, le module de toit (50) du nouveau boîtier est enlevé et des oeillets de levage (12) sont montés dans le côté supérieur du reste du corps, notamment par vissage.

6. Procédé selon l'une quelconque des revendications précédentes, **caractérisé en ce qu'**avant la pose, les portes d'habillage (4) du nouveau boîtier, les parois latérales (8) et/ou la paroi arrière (11) sont enlevées et remontées avant la fin des travaux.

7. Procédé selon l'une quelconque des revendications précédentes, **caractérisé en ce qu'**après le montage de l'habillage sur le nouveau corps, les oeillets de levage (12) sont enlevés et le module de toit (50) est posé et fixé.

8. Procédé selon la revendication 7, **caractérisé en ce que** le module de toit (50) est fixé en engageant le module de toit (50) par le haut depuis l'extérieur avec son bord inférieur dans l'état posé avec les parois latérales (8) et la paroi arrière (11).

9. Procédé selon la revendication 7 ou 8, **caractérisé en ce que** le module de toit (50) est fixé par engagement positif par rapport au corps intérieur (21), qui se compose de préférence d'un cadre de corps.

10. Procédé selon la revendication 9, **caractérisé en ce que** le module de toit (50) est fixé horizontalement par l'avant par rapport au corps intérieur (21) en enfonçant des barres de fixation dans l'espace intermédiaire entre le corps intérieur (21) et la paroi latérale (8) avec les portes ouvertes (4), la barre de fixation traversant des saillies de fixation du module de toit (50) ainsi que du corps intérieur (21) et les reliant ainsi mutuellement par engagement positif.

11. Procédé selon l'une quelconque des revendications précédentes, **caractérisé en ce qu'**après la pose du nouveau corps (3) et avant le montage de son habillage, le nouveau boîtier est fixé mécaniquement par rapport au cadre de montage ancien (6) et/ou par rapport au socle ancien (2').

12. Procédé selon l'une quelconque des revendications précédentes, **caractérisé par** le vissage de vis d'ajustage (13) à travers le nouveau corps contre la région supérieure du socle ancien (2') et par le support des vis d'ajustage (13) contre ce socle ancien.

13. Procédé selon l'une quelconque des revendications précédentes, **caractérisé par** le serrage d'une bande perforée (14) entre notamment la région supérieure du cadre de montage ancien (6) et la région supérieure du nouveau corps (3), notamment par la fixation de la bande perforée (14) au moyen de boulons en T (15) déplaçables dans la direction longitudinale dans les profilés des bords du nouveau corps (3).

14. Procédé selon l'une quelconque des revendications précédentes, **caractérisé en ce qu'**avant la fixation mécanique du nouveau corps (3) par rapport au socle ancien (2') et/ou au cadre de montage ancien (6), notamment directement après l'enlèvement du corps ancien (3'), les vis de fixation (18) sont desserrées entre le cadre de montage ancien (6) et le socle ancien (2'), notamment sont arrachées.

15. Procédé selon l'une quelconque des revendications précédentes, **caractérisé en ce qu'**après la pose du nouveau corps (3) l'espace libre vu de dessus entre le pourtour intérieur du nouveau corps (3) et le pourtour extérieur du socle ancien (2'), notamment le bord supérieur du socle ancien (2'), est fermé de manière étanche aux ondes électromagnétiques, notamment par un ruban de feuille métallique (11), notamment un ruban autoadhésif.

16. Procédé selon l'une quelconque des revendications précédentes, **caractérisé en ce qu'**après la pose du nouveau corps (3), notamment après la fixation mécanique par rapport au cadre de montage ancien (6), le cadre de montage supplémentaire et/ou les composants intégrés supplémentaires dans le nouveau corps (3) sont incorporés et raccordés électriquement, la déconnexion des composants électriques intégrés dans l'ancien cadre de montage (6) s'effectuant de préférence uniquement pendant le raccordement des nouveaux composants intégrés.

17. Ensemble pour une nouvelle unité d'armoire de distribution qui peut être posée selon le procédé de la revendication 1 par-dessus un socle déjà existant et un cadre de montage (6) monté sur ce socle, avec un socle (2) creux en vue de dessus, un corps (3), au moins un module de toit (50), des parois latérales (8), une paroi arrière (11) et au moins une porte (4a,b) pour habiller le corps (3) et au moins un oeillet de levage (12), le socle (2) étant constitué de pièces connectées les unes aux autres, à savoir d'au moins une caisse de socle (2a) creuse en vue de dessus et de pieds de socle (26) disposés en dessous, **caractérisé en ce que** les pieds de socle (26) dépassent latéralement de la caisse de socle (2a), les pieds de socle étant constitués de parties latérales de pieds de socle (2c) et d'une plaque de pieds de socle (2d), les plaques (2d), vues de dessus, ne s'étendant en fonction de l'épaisseur des parois latérales de la caisse de socle (2a) qu'en dessous de celle-ci vers l'intérieur de sorte que l'espace libre dans la caisse de socle, vu de dessus, ne soit pas réduit par celles-ci.

18. Ensemble selon la revendication 17, **caractérisé en ce que** l'ensemble comprend au moins un dispositif de fixation, notamment des bandes perforées (14), pour la fixation du cadre de montage ancien (6) sur le nouveau corps (3).

19. Ensemble selon l'une quelconque des revendications 17 ou 18, **caractérisé en ce que** l'ensemble comprend des vis d'ajustage (13) pour l'ajustage de la distance entre le nouveau corps (3) et l'ancien socle (2') et/ou l'ancien cadre de montage (6).

20. Ensemble selon l'une quelconque des revendications 17 à 19, **caractérisé en ce que** l'ensemble comprend un habillage de socle pour l'ancien socle, notamment au moins un habillage de socle frontal.

21. Ensemble selon l'une quelconque des revendications 17 à 20 précédentes, **caractérisé en ce que** le nouveau corps (3) comprend un blindage contre les ondes électromagnétiques.

22. Ensemble selon l'une quelconque des revendications 17 à 21, **caractérisé en ce que** le nouveau socle (2) présente une hauteur inférieure à celle de l'ancien socle (2').

23. Ensemble selon l'une quelconque des revendications 17 à 22, **caractérisé en ce que** le nouveau corps (3) comprend un cadre de corps (16) constitué de profilés (17), notamment de profilés métalliques, le long des bords du boîtier cubique, en retrait vers l'intérieur, et en particulier des traverses périphériques horizontales (34) sont prévues à la hauteur de la transition entre le socle ancien et le cadre de montage ancien (6).

24. Ensemble selon l'une quelconque des revendications 17 à 23, **caractérisé en ce que** la position en hauteur des traverses (34) par rapport au nouveau corps (3) peut être ajustée.

25. Ensemble selon l'une quelconque des revendications 17 à 24, **caractérisé en ce que** l'on prévoit dans les traverses avant et arrière et/ou latérales (34) des alésages filetés traversants horizontaux pour le vissage de vis d'ajustage (13).

26. Ensemble selon l'une quelconque des revendications 17 à 25, **caractérisé en ce que** l'on prévoit dans les montants du cadre du corps (16), notamment dans les montants périphériques horizontaux supérieurs, des rainures en contre-dépouille avec des boulons en T insérés (15) qui comprennent des filetages internes pour le vissage de dispositifs de fixation, notamment de bandes perforées (14).

27. Ensemble selon l'une quelconque des revendications 17 à 26, **caractérisé en ce que** la paroi latérale (11) et/ou la paroi arrière (8) du nouveau corps (3) s'étendent sur toute sa hauteur.

28. Ensemble selon l'une quelconque des revendications 17 à 27, **caractérisé en ce que** des dispositifs de fixation, notamment des filetages internes, sont prévus dans le côté supérieur du nouveau corps (3) restant après l'enlèvement du module de toit (50), notamment sur au moins deux coins diagonalement opposés l'un à l'autre, notamment dans le cadre du boîtier.

29. Ensemble selon l'une quelconque des revendications 17 à 28, **caractérisé en ce que** l'ensemble comprend des bandes de blindage contre les ondes électromagnétiques, notamment sous forme de feuille métallique autoadhésive (14), notamment de feuille d'aluminium, notamment en forme de bande de bitume revêtue d'une feuille métallique.
